# EUROPEAN PATENT APPLICATION

(11) **EP 3 335 980 A1**
(43) Date of publication of application: **20.06.2018**
(21) Application number: 16382611.8
(22) Date of filing: 16.12.2016
(51) Int. Cl.: B64C 1/06, B64C 1/12, F16B 5/00

(54) **SYSTEM FOR ATTACHING SHELLS**

(71) Applicant: Airbus Operations S.L., 28906 Getafe (ES)
(72) Inventor: ARANA HIDALGO, Alberto, E-28906 Getafe-Madrid (ES); VÁZQUEZ CASTRO, Jesús Javier, E-28906 Getafe-Madrid (ES)
(74) Representative: ABG Patentes, S.L.

(57) **Abstract**

System for attaching a first shell (1) with a first protrusion (1.2) and a second shell (2) with a second protrusion (2.3), comprising a butt joint (3) configured to attach the first and second shell (1,2) in an attaching interface, the butt joint (3) comprising an external strap (4) faced outward of the aircraft (10) comprising an external hole (4.1) and an external surface (4.2), an internal strap (5) faced inward of the aircraft (10), comprising an internal hole (5.1), a bolt (6), configured to pass through the external hole (4.1) and the internal hole (5.1), a nut (7) configured to fix the bolt (6) to the external (4) and internal (5) straps, the first protrusion (1.3) and second protrusion (2.3) of each structural shell (1, 2) remaining fixed between said external (4) and internal (5) strap, and a void area (8) arranged around the bolt (6), the void area (8) being an area formed by the external (4) and internal (5) strap. The first (1) and second (2) shell comprise respectively a first recess (1.4) and a second recess (2.4) over the protrusions (1.3, 2.3), and the first and second protrusions (1.3, 2.3) being located between external (4) and internal (5) strap of the butt joint (3), said first and second protrusions (1.3, 2.3) also partially occupying the void area (8).

## Description

### TECHNICAL FIELD OF THE INVENTION

The present invention belongs to the field of aircraft structures and, more particularly, to the field of shells attaching system of an aircraft.

### BACKGROUND OF THE INVENTION

The mechanical assembly of an aircraft involves performing joints at longitudinal stations between different structural elements, i.e. fuselage sections. Such joints have steps or gaps which should be minimized in order to reduce drag and ensuring a smooth transition of the external surface of the aircraft, or in order to obtain a step within certain limits accepted by the aero tolerances.

These joints at longitudinal stations between fuselage sections are performed as circumferential joints, in such a way that it is needed a plurality of means for attaching arranged along the circumferential joint.

There are known techniques for attaching fuselage sections of an aircraft, for example, butt joints of the external surfaces of said fuselage sections. These butt joints are performed, for example, by means of mechanically fastened butt straps wherein loads needs to be transferred between the external surfaces of the fuselage sections (i.e. the shells of the fuselage) or simply by a seal between these surfaces where the attachment is located when no loads transfer is required at the surface of the fuselage sections (i.e. load is transferred by fittings within the internal structure of both sections).

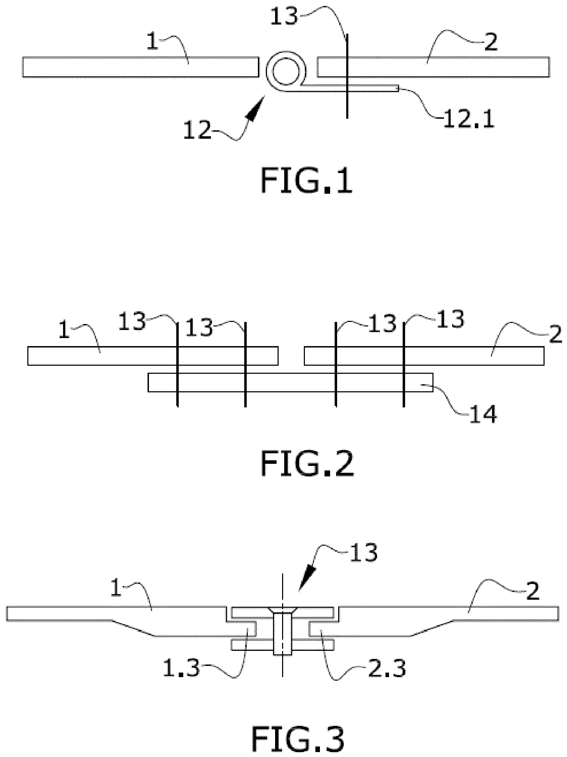

A "butt joint" is understood as a technique for attaching or a mechanical connection at the surface of the fuselage sections in which two structural pieces (i.e. fuselage shells) are joined end to end without direct overlapping, i.e. if it is necessary transferring longitudinal loads. The butt joint consists of a strap which attaches both structural pieces in its internal side, and which is in charge of transfer said longitudinal loads (as it can sees in Figure 2). Also, if it is not necessary transferring longitudinal loads through the surface of the fuselage sections, the butt joint consists of a seal provided between both structural pieces (as it can be seen in Figure 1).

Due to the tolerances between the shells and the manufacturing tolerances, said butt joint is not smooth enough and causes gaps or steps between the external surfaces of the shells. Thus, disadvantageously, it is provided drag, impacting negatively on the fuel consumption of the aircraft. Additionally, said drag provided produces the erosion of the joint, in particular, of the shell edge if a step or gap exists between shells.

Butt joints provides a smooth transition of the external surfaces of shells but required internal members, i.e. butt straps, which are in charge of transfer loads between the sections. In particular, in case no loads transfer is required, i.e. because the main load is transferred internally through a fitting, the requirement to install splices is costly to install. Therefore, the present invention, advantageously, provides a particular butt joint which ensures the transition of the external surfaces between shells when no longitudinal load transfer is required at the connection of the shells (i.e. it is a sliding joint in the longitudinal direction).

Furthermore, in the mechanical assembly of an aircraft, there are known techniques for performing joints between non-loaded structure and loaded structure. Examples of joints between non-loaded structure and loaded structure are the joint between the belly fairing and the fuselage of an aircraft, or the joint between the dorsal fin and the fuselage of an aircraft. There are known techniques for attaching the belly fairing to the fuselage of an aircraft, i.e. joints with seals configured to absorb and/or minimize gaps or steps between belly fairing and aircraft fuselage, or fixed joints like belly fairing fixed to aircraft fuselage joints. Such techniques avoid airflow coming on the belly fairing, but take loads due to fuselage deformation.

When no load transfer is required (load is transferred by internal attachments, not by the external surfaces itself) the mechanical connection is reduced and at the same time the joint does not guarantee the contour external shape of the non-loaded structure. In some cases, a simple seal absorbs the deformation (if it is not big) when the non-loaded structure is perpendicular or at an angle to the main surface or simply a few attachment points which are circumferentially provided also not guaranteeing the shape of the non-loaded shell when butt joints are required.

Considering the above drawbacks of current joints, the present invention provides an attaching system between fuselage sections of an aircraft with a smooth surface in such a way that the contours of said fuselage section adapt to each other. The present invention also provides an attaching system which improves the longitudinal joints between said fuselage sections, and which provides continuity surfaces on the fuselage sections attached without gaps or steps, and also reduces the drag or erosion of the joint.

### SUMMARY OF THE INVENTION

The present invention provides an alternative solution for the aforementioned problems, by a system for attaching structural shells of an aircraft according to claim 1 and an aircraft according to claim 10. In dependent claims, preferred embodiments of the invention are defined.

In a first inventive aspect, the invention provides a system for attaching a first shell and a second shell of an aircraft,
o the first shell comprising
   an external side faced outward of the aircraft,
   an internal side faced inward of the aircraft,
   a first protrusion,
o the second shell comprising
   an external side faced outward of the aircraft,
   an internal side faced inward of the aircraft,
   a second protrusion,
o a butt joint configured to attach the first and the second shell in an attaching interface, the butt joint comprising
   an external strap faced outward of the aircraft, said external strap comprising an external hole and an external surface,
   an internal strap faced inward of the aircraft, said internal strap comprising an internal hole,
   a bolt, configured to pass through the external hole and the internal hole,
   a nut configured to fix the bolt to the external and internal straps, in such a way that the first protrusion and second protrusion respectively of each structural shell remain fixed between said external and internal strap, and
   a void area arranged around the bolt, the void area being an area formed by the external and internal strap,
   wherein
   the first and second shell comprise respectively a first recess and a second recess over the protrusions, and
   the first and second protrusions being configured to be located between external and internal strap of the butt joint, said first and second protrusions also being configured to partially occupy the void area.

Throughout this document, "shell" will be understood as the coating or the skin of a structural part of an aircraft. Said shell is located outside the aircraft, in such a way that the shell comprises two sides, one of them is an external side which is faced outward of the aircraft, and the other is an internal side which is faced inward of the aircraft.

Throughout this document, "attaching interface" will be understood as the smooth area or surface without steps, wherein the first shell and the second shell are joined.

In order to provide an improved joint between structural shells, the system provides a butt joint that comprises an external strap and an internal strap, and the shells comprises a protrusion which will be located and fixed between said straps. Additionally, the rivet of the butt joint defined by a bolt and a nut is the component responsible for maintaining fixed and tight the joint between the shells.

Furthermore, the arrangement of both straps defines an area which provides at locations void areas between the protrusions edges of each shell. When the joint is assembled, the void are is the area located around the bolt, and is an area partially occupied by the protrusion of each structural shell. Thus, the protrusion is positioned between the straps in such a way that said protrusion occupied a part of the void area of the butt joint. Additionally, when the joint is assembled, the edges of the first and second protrusion get closer to each other except at the bolt locations, thus the void area allows the butt joint installation.

Advantageously, the particular combination of each strap of the present butt joint provides an improved and robust joint, thus the joint is more stabilized than the joints of the state of the art. Additionally, the present joint advantageously avoids the appearance of a separation step, as a gap, between the shells, and thus, reduces the drag or erosion to the shell edges.

In a particular embodiment, the first protrusion and the second protrusion comprises a first and second area respectively, said areas being configured to house the external strap, in such a way that the external sides of the shells and the external surface of the external strap are comprised in the attaching interface.

For locating the protrusion of each shell between the straps, each shell expand its thickness inward the aircraft. Said thickness expansion allows having the protrusions outgoing from each shell, and allows each shell comprising a recess. Said recess on each shell defines an area over the protrusion intended for housing the external strap.

The present system for attaching two shells by a butt joint, advantageously, provides a joint with continuity between both shells. That is because the external strap comprises a thickness which coincides with the height of the recesses of each structural shell. Thus, the areas defined over each protrusion house an area of the external strap in such a way that the external sides of both shells respectively and the external surface of the external strap are comprised in the same attaching interface.

In a particular embodiment, the butt joint further comprises at least one ring seal configured to be located on the void area, in such a way that the at least one ring seal is in contact with the first and second protrusion respectively. Advantageously, such ring seal is applied in order to provide an environmental protection or liquid tight joint.

In a particular embodiment, the first and second protrusions comprises a first protrusion recess and a second protrusion recess respectively, said first and second protrusion recesses configuring a housing for the at least one ring seal.

Advantageously, said protrusion recesses are provided adapted for housing the ring seal, in such a way that said ring seal located between said protrusion recesses ensure an environmental protection or a liquid tight joint.

In a particular embodiment, the bolt comprises a head. In a more particular embodiment the head of the bolt is a countersunk bolt.

The bolt head of the butt joint comprises an external surface which is faced outward of the aircraft when the bolt is already fixed on the butt joint.

In particular embodiment, the external strap further comprises a countersunk area configured to receive the head of the bolt.

The presences of a countersunk area on the external strap, allows that the head of the bolt supports and fits on said countersunk area of the strap. Then, when the bolt is already fixed on the butt joint, the external surface of the bolt head and the external sides of the external straps are comprised in the attaching interface. Thus, advantageously, the countersunk area helps the butt joint provided having a continuity and smooth external surface.

In a particular embodiment, the external strap and internal strap are made of non-rigid materials, in particular elastomeric materials.

Advantageously, non-rigid materials absorb the relative displacements between the two shells without introducing any longitudinal load, and also keeping the external surface smooth.

In a particular embodiment, the first shell is a loaded shell, and the second shell is a non-loaded shell.

In another particular embodiment, both first shell and the second shell are loaded shells.

In a particular embodiment, the longitudinal joint between fuselage sections consists positioning a plurality of discrete number of butt joints along a circumferential joint between said fuselage sections. Thus, the discrete number of butt joint which is positioned along said circumferential joint defines the distortion provided between both shells of fuselage sections. The greater number of butt joint positioned along the circumferential joint, the lower distortion is provided between both shells. Additionally, the lower number of butt joint positions along the circumferential joint, the larger distortion are provided between said structural shells.

In a second inventive aspect, the invention provides an aircraft that comprises a system according to the first inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 This figure shows a schematic cross-section view of an attaching system of the prior art.
Figure 2 This figure shows a schematic cross-section view of another attaching system of the prior art.
Figure 3 This figure shows a schematic cross-section view of an embodiment of the system according to the present invention.
Figure 4 This figure shows a schematic cross-section view of the aircraft fuselage comprising mechanical connections.
Figure 5 This figure shows a schematic cross-section view of the aircraft fuselage comprising mechanical connections.cross-section view
Figure 6 This figure shows a perspective view of an embodiment of the system according to the present invention.cross-section view
Figure 7 This figure shows a cross-section view of an embodiment of the system according to the present invention.
Figure 8 This figure shows a cross-section view of the aircraft fuselage comprising butt joints according to the present invention.
Figure 9 This figure shows a perspective view of an aircraft according to the present invention.
Figure 10 This figure shows a perspective view of aircraft parts according to the present invention.

### DETAILED DESCRIPTION OF THE INVENTION

The present invention provides an improved system for attaching a first structural shell (1) and a second shell (2) of an aircraft (10) by a longitudinally sliding butt joint (3) with relative freedom to move in the longitudinal direction of said joint between the shells, in such a way that do not introduce or transfer load from one shells to the other in the longitudinal direction).

Figure 1 shows a schematic view of a mechanical connection of the prior art comprising a first shell (1) and a second shell (2), wherein both shells (1, 2) are not overlapped on each other. The mechanical connection comprises a seal (12) located between both shells (1, 2), and such seal (12) comprises a projection (12.1) located under the second shell (2), in such a way that said projection (12.1) is fixed to said second shell (2) by fixing means (13). This attachment does not comprise longitudinal loads transfer between both shells (1, 2).

Figure 2 shows a schematic view of a mechanical connection of the prior art comprising a first shell (1) and a second shell (2), wherein both shells (1, 2) are not overlapped on each other. The mechanical connection comprises a butt strap (14) located under both shells (1, 2) and fixed to such shells (1, 2) by fixing means (13). This attachment comprises longitudinal loads transfer in such a way that said loads are transferred through the butt strap (14).

Figure 3 shows a schematic view of an attachment of a first shell (1) and a second shell (2) according to the present invention, wherein both shells (1, 2) are not overlapped on each other. This attachment comprises a butt joint (3), wherein said butt joint (3) is adapted to join both shells (1, 2) thorough protrusions (1.3, 2.3) of each shell (1, 2) respectively. This attachment does not comprise longitudinal loads transfer between both shells (1, 2).

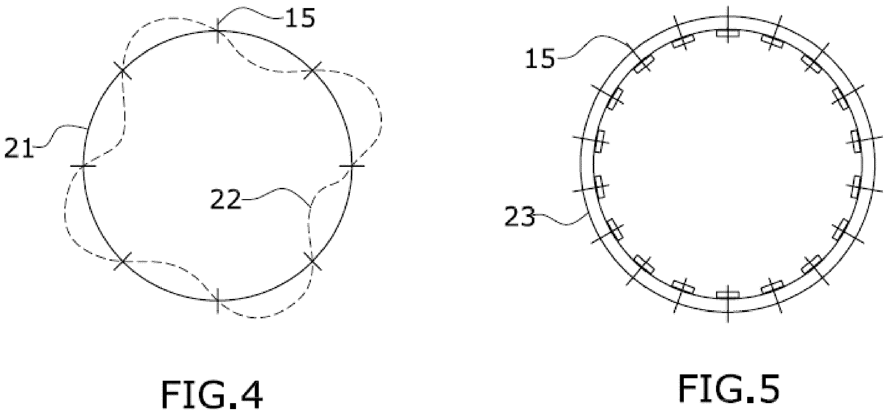

Figures 4 and 5 show a schematic cross-section view of an aircraft fuselage (11) comprising a plurality of mechanical connections (15) arranged along a circumferential joint, being said circumferential joint a longitudinal joint of the fuselage (11) between shells (1, 2). In figure 4 it is shown how a second contour (22) of a non-loaded structure shell (2) is adapted to a first contour (21) of a loaded structure shell (1) in order to obtain a stiffener shells between said structures, when no loads are transferred longitudinally between shells (1, 2). To adapt the tolerances of both shells (1, 2), the number of mechanical connections (15) need to be increased in a circumferential joint ensuring low profile distortion between the shells (1, 2). Thus, in order to reduce the deviation between both shells (1, 2) a larger amount of mechanical connections (15) is required, in such a way that the time to adapt and to conform the deviation between the surfaces of shells (1, 2) is increased. Such increase of amount of mechanical connection (15) it is shown in figure 5, wherein a discrete number of mechanical connection (15) is provided to conform a third contour (23) of both shells (1, 2) ensuring the same transversal shape of sections, avoiding the transversal deviation between both shells (1, 2).

Thus, the invention provides an easy to install continuous mechanical connections, in particular the butt joints (3), which ensure a proper alignment of both external surfaces (1.1, 2.1) of each sell (1, 2) respectively.

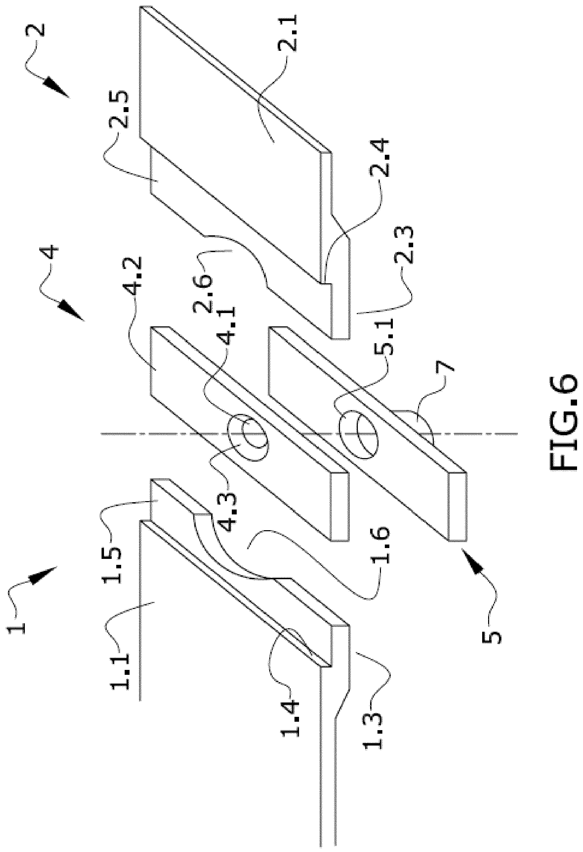

Figure 6 shows a perfective view of the present system in which it can be observed the first structural shell (1), the second shell (2), and an external (4) and internal (5) strap of the butt joint (3).

In a particular example, the first shell (1) and second shell (2) are different part of the fuselage (11) of the aircraft (10). Thus, said first shell (2) and second shell (2) comprise an external side (1.1, 2.1) and an internal side (1.2, 2.2) respectively. The external sides (1.1, 2.1) correspond to the external surfaces of each shells (1, 2) respectively. The internal sides (1.2, 2.2) correspond to the internal surfaces of each shells (1, 2) respectively. Such external sides (1.1, 1.2) are configured to be faced outward of the fuselage (11) of the aircraft (10), and the internal sides (1.2, 2.2) are configured to be faced inward of the fuselage (11) of the aircraft (10).

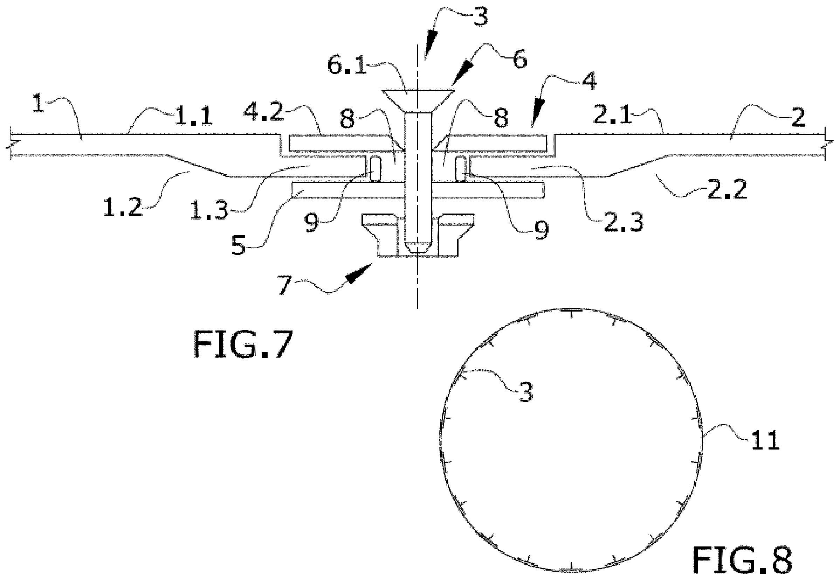

Each shell (1, 2) comprises respectively a first (1.4) and a second (2.4) recess which allow each shell (1, 2) respectively having a first (1.3) and second (2.3) protrusions outgoing from said shells (1, 2). The recesses (1.4, 2.4) define a first (1.5) and second (2.5) area respectively over the protrusions (1.3, 2.3), so that said areas (1.5, 2.5) house respectively a part of the external strap (4) (as it can be observed in figure 7).

The first (1.3) and second (2.3) protrusion of each shell (1, 2) comprise respectively a protrusion recess (1.6, 2.6). In a particular example, said protrusion recesses (1.6, 2.6) are arc-shaped recesses.

The external strap (4) and the internal strap (5) of the butt joint (3) comprise respectively an external hole (4.1) and internal hole (5.1) which are configured for allowing the bolt (6) to pass through the straps (4, 5). Additionally, the external strap (4) comprises an external surface (4.2) configured to be faced outward the aircraft (10).

The butt joint (3) also comprises a bolt (6), and a nut (7) (not shown in figure 4). In a particular example, as it is shown in figure 5, the nut (7) is already attached to the internal strap (5) in such a way that finally the assembly is much easier.

Figure 7 shows a cross-section view of the present system wherein the protrusions (1.3, 2.3) of each shell (1, 2) respectively are located between the external (4) and internal (5) strap of the butt joint (3). This figure 2 also shows the bolt (6) of the butt joint (3) partially introduced through the external (4.1) and internal (5.1) hole of the external (4) and internal (5) straps respectively, and partially introduced within the nut (7).

In a particular example, the bolt (6) is threaded into the nut (7).

The butt joint (3) comprises a void area (8) being formed by the external strap (4) and the internal strap (5), and also said void area (8) being an area arranged around the bolt (6). Since the protrusions (1.3, 2.3) of each shell (1, 2) respectively are located between the straps (4, 5), said protrusions (1.3, 2.3) partially occupy the void area (8).

The system shown in figure 5 also comprises a ring seal (9) which is located in the void area (8) and is in contact with the protrusions (1.3, 2.3). Furthermore, the protrusion recesses (1.6, 2.6) of each protrusion (1.3, 2.3) respectively are configured for housing said ring seal (9).

The attaching system defines an attaching interface that is a smooth surface, said interface being provided by the external sides (1.1, 2.1) of the structural shells (1, 2) respectively, and the external surface (4.2) of the external strap (4).

As it can be observed in said figure 7, the external strap (4) comprises a thickness which coincides with the height of the recesses (1.4, 2.4) of each shell (1, 2). The external strap (4) is housed in the areas (1.5, 2.5) of each structural shell (1, 2) in such a way that the external sides (1.1, 2.1) of the shells (1, 2) respectively and the external surface (4.1) of said external strap (4) are comprised in the attaching interface. Thus, the shells (1, 2) and said external strap (4) being arranged in a continued way and defining a smooth external surface faced outward the aircraft (10).

Since the shells (1, 2) may have different thickness, each protrusion (1.3, 2.3) of said shells (1, 2) respectively will have different thickness. Thus, depending on the thickness of each shell (1, 2), the recesses (1.4, 2.4) will have different highs because protrusions (1.3, 2.3) with different thickness will be necessary. Consequently, it will be necessary an external strap (4) which thickness varies depending on the high of each recess (1.4, 2.4). In figure 5 it is shown a particular example wherein the thicknesses of the second shell (2) is higher than the thickness of the first shell (1). Thus, as it can be observed in this figure, the height of the second recess (2.4) is greater than the height of the first recess (1.4), and the external strap (4) has a thickness which varies from small to large from the area of the strap (4) that is housed in the first shell (1) to the area of the strap (4) that is housed the second shell (2).

Additionally, the external strap (4) comprises a countersunk area (4.3) for receiving the head (6.1) of the bolt (6). In the particular example shown in figure 2, the head (6.1) of the bolt (6) is a countersunk head.

Figure 8 shows a cross-section view of a longitudinal joint of an aircraft fuselage (11) comprising a plurality of butt joints (3) along a circumferential joint. Said circumferential joint is the longitudinal joint between two fuselage sections of the aircraft (10). The number of butt joints (3) depends on the aircraft loads.

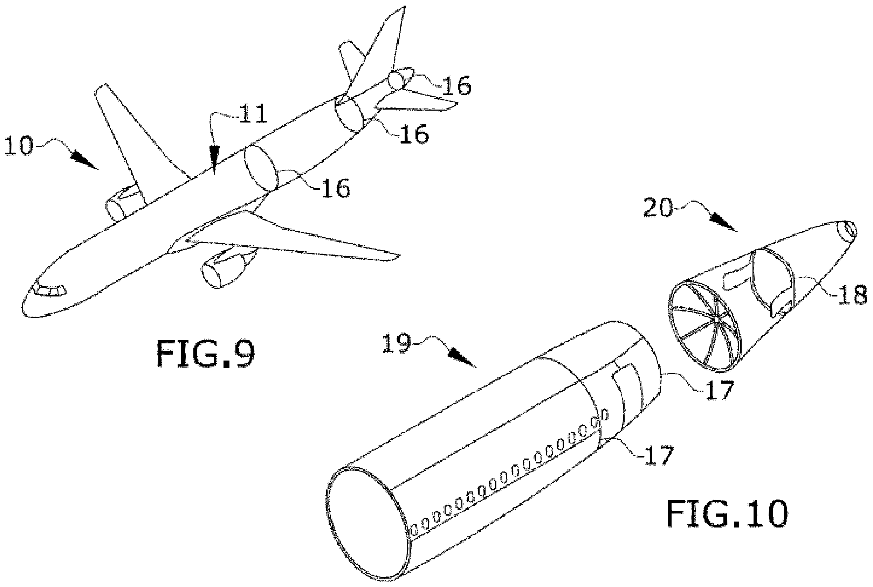

Figure 9 shows an example of an aircraft (10) which comprises a fuselage (11) wherein the present attaching system is implemented in a plurality of longitudinal joints (16) between fuselage sections.

Figure 10 shows a central part (19) of the aircraft (10) and a tail cone (20) of such aircraft (10), wherein the present attaching system is implemented, in first longitudinal joints (17) and in a second longitudinal joint (18) between fuselage sections. The first joints (17) are arranged between loaded shells, and the second joint (18) is arranged between a loaded shell to a non-loaded shell (from the central part to the tail cone).

## Claims

1. System for attaching a first shell (1) and a second shell (2) of an aircraft (10),
o the first shell (1) comprising
an external side (1.1) faced outward of the aircraft (10),
an internal side (1.2) faced inward of the aircraft (10),
a first protrusion (1.3),
o the second shell (2) comprising
an external side (2.1) faced outward of the aircraft (10),
an internal side (2.2) faced inward of the aircraft (10),
a second protrusion (2.3),
o a butt joint (3) configured to attach the first (1) and the second (2) shell in an attaching interface, the butt joint (3) comprising
an external strap (4) faced outward of the aircraft (10), said external strap (4) comprising an external hole (4.1) and an external surface (4.2),
an internal strap (5) faced inward of the aircraft (10), said internal strap (5) comprising an internal hole (5.1),
a bolt (6), configured to pass through the external hole (4.1) and the internal hole (5.1),
a nut (7) configured to fix the bolt (6) to the external (4) and internal (5) straps, in such a way that the first protrusion (1.3) and second protrusion (2.3) respectively of each structural shell (1, 2) remain fixed between said external (4) and internal (5) strap, and
a void area (8) arranged around the bolt (6), the void area (8) being an area formed by the external (4) and internal (5) strap,
wherein
the first (1) and second (2) shell comprise respectively a first recess (1.4) and a second recess (2.4) over the protrusions (1.3, 2.3), and
the first and second protrusions (1.3, 2.3) being configured to be located between external (4) and internal (5) strap of the butt joint (3), said first and second protrusions (1.3, 2.3) also being configured to partially occupy the void area (8).

2. System according to claim 1, wherein the first protrusion (1.3) and the second protrusion (2.3) comprises a first (1.5) and second (2.5) area respectively, said areas (1.5, 2.5) being configured to house the external strap (4), in such a way that the external sides (1.1, 2.1) of the shells (1, 2) and the external surface (4.2) of the external strap (4) are comprised in the attaching interface.

3. System according to any of previous claims, wherein the butt joint (3) further comprises at least one ring seal (9) configured to be located on the void area (8), in such a way that the at least one ring seal (9) is in contact with the first (1.3) and second (2.3) protrusion respectively.

4. System according to claim 3, wherein the first (1.3) and second (2.3) protrusions comprises a first protrusion recess (1.6) and a second protrusion recess (2.6) respectively, said first (1.6) and second (2.6) protrusion recesses configuring a housing for the at least one ring seal (9).

5. System according to any of previous claims, wherein the bolt (6) comprises a head (6.1).

6. System according claim 5, wherein the external strap (4) further comprises a countersunk area (4.3) configured to receive the head (6.1) of the bolt (6).

7. System according to any of previous claims, wherein the external (4) and internal (5) strap are made of non-rigid materials, in particular elastomeric materials.

8. System according to any of previous claims, wherein the first structural shell (1) is a loaded shell and the second structural shell (2) is a non-loaded shell.

9. System according to any of claims 1 to 7, wherein the first structural shell (1) and the second structural shell (2) are loaded shells.

10. Aircraft (10) comprising a system according to any of claims 1 to 9.
